(19) Europäisches Patentamt
European Patent Office
Office européen des brevets

(11) Veröffentlichungsnummer : **0 068 350**
**B1**

(12) # EUROPÄISCHE PATENTSCHRIFT

(45) Veröffentlichungstag der Patentschrift : **07.08.85**

(51) Int. Cl.⁴ : **C 07 F 9/38**

(21) Anmeldenummer : **82105346.9**

(22) Anmeldetag : **18.06.82**

(54) **Verfahren zur Herstellung von Derivaten der Vinylphosphon- oder Vinylpyrophosphonsäure.**

(30) Priorität : **27.06.81 DE 3125329**

(43) Veröffentlichungstag der Anmeldung : **05.01.83 Patentblatt 83/01**

(45) Bekanntmachung des Hinweises auf die Patenterteilung : **07.08.85 Patentblatt 85/32**

(84) Benannte Vertragsstaaten : **BE CH DE FR GB IT LI NL**

(56) Entgegenhaltungen :
**FR-A- 1 472 789**
**FR-A- 2 117 553**
**HOUBEN-WEYL: "Methoden der organischen Chemie", Band XII/1, 1963, Seiten 362-365, Georg Thieme Verlag, Stuttgart, DE.**

(73) Patentinhaber : **HOECHST AKTIENGESELLSCHAFT**
**Postfach 80 03 20**
**D-6230 Frankfurt am Main 80 (DE)**

(72) Erfinder : **Krause, Werner, Dr.**
**Alleestrasse 42**
**D-5030 Hürth (DE)**
Erfinder : **Pieper, Werner, Dr.**
**Am Wachberg 27a**
**D-5042 Erftstadt (DE)**

**EP 0 068 350 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand vorliegenden Erfindung ist ein Verfahren zur Herstellung von Derivaten der Vinylphosphon- oder Vinylpyrophosphonsäure.

Vinylphosphon-, Vinylpyrophosphonsäure und die Derivate dieser Säuren sind von technischem Interesse, da sie zu hochmolekularen Verbindungen polymerisiert oder mit anderen polymerisationsfähigen Vinylverbindungen zu einem Mischpolymerisat verarbeitet werden können.

Man erhielt sie bislang durch Umsetzung von Ketonen mit $PCl_3$. Diese Darstellungsweise besaß jedoch erhebliche Nachteile, da sie mehrstufig über verschiedene Zwischenprodukte verläuft, wobei das als Chlorwasserstoff bzw. Acetylchlorid abgespaltene Chlor große Korrosionsprobleme aufwirft.

Aufgabe der vorliegenden Erfindung war es, diese Nachteile der bekannten Arbeitsweise zu überwinden.

Uberraschenderweise wurde nun gefunden, daß sich diese Aufgabe in einfacher Weise lösen läßt, wenn man ein Keton der allgemeinen Formel

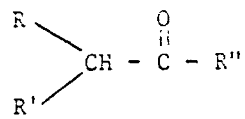

in der R und R' gleich oder verschieden sein können und für Wasserstoff oder einen halogensubstituierten oder nicht substituierten Alkyl-, Aryl-, Alkaryl- oder Aralkylrest mit 1 bis 18 C-Atomen stehen, während R" einen Alkyl-, Aryl-, Alkaryl- oder Aralkylrest mit 1 bis 18 C-Atomen darstellt, oder wenn R Wasserstoff ist, R' und R" zusammen unter Ringbildung einen Butylenrest darstellen, mit Tetraphosphorhexoxid ($P_4O_6$) in Gegenwart von katalytischen Mengen einer protonenabspaltenden Substanz bei erhöhten Temperaturen umsetzt und, im Falle der Herstellung von Vinylphosphonsäurederivaten, die erhaltenen Vinylpyrophosphonsäurederivate mit einer äquivalenten Menge Wasser hydrolysiert.

Unter gleichen Bedingungen erhält man mit Cyclohexanon als Keton Cyclohexenphosphon- bzw. Pyrophosphonsäure. Vorteilhafterweise setzt man das Keton mit dem $P_4O_6$ in einem Molverhältnis von mindestens 4 : 1 um.

Es empfiehlt sich, die protonenabspaltende Substanz in Mengen von mindestens 0,000 1 Gewichts% vorzugsweise von 0,01 bis 1 Gewichts% bezogen auf $P_4O_6$ einzusetzen und die Umsetzung bei Temperaturen von 40 bis 150 °C durchzuführen.

Als protonenabspaltende Substanzen sind beispielsweise geeignet Wasser, Alkohole, Amine, Salzsäure, Schwefelsäure, Phosphonsäure, phosphorige Säure, Phosphonsäuren oder Carbonsäuren.

Besonders bevorzugt für diesen Zweck ist der Zusatz des jeweiligen herzustellenden Endproduktes, da hierdurch keine Fremdsubstanzen in die Reaktion eingebracht werden.

Eine bevorzugte Durchführung des erfindungsgemäßen Verfahrens erfolgt in der Weise, daß man zu vorgelegtem Keton, welches gegebenenfalls mit einem inerten organischen Lösemittel verdünnt ist, $P_4O_6$ dosiert. Das $P_4O_6$ kann ebenfalls mit einem inerten organischen Lösemittel verdünnt werden. Damit die Reaktion gestartet werden kann, muß das vorgelegte Keton eine katalytische Menge einer Substanz enthalten, die sich dadurch auszeichnet, daß sie leicht Protonen abspaltet und spontan mit $P_4O_6$ unter Öffnung einer P-O-P-Bindung reagiert.

Die Zugabe des $P_4O_6$ erfolgt vorzugsweise kontinuierlich bei erhöhter Temperatur, insbesondere im Bereich von 40-150 °C. In diesem Temperaturbereich reagiert das $P_4O_6$ in einer exothermen Reaktion vollständig ab. Während der Umsetzung ist eine zusätzliche Heizung meist nicht erforderlich, da die Reaktionsenthalpie ausreicht, die gewählte Reaktionstemperatur zu halten, so daß die Temperatur über die Zugabegeschwindigkeit des $P_4O_6$ gesteuert werden kann.

Bei den besonders reaktionsfähigen Ketonen, wie z. B. Acetophenon, führt die Umsetzung direkt zu Derivaten der Vinylpyrophosphonsäure, die entweder als solche isoliert oder nach Zugabe der stöchiometrisch erforderlichen Menge Wasser zu entsprechenden Vinylphosphonsäurederivaten umgesetzt werden können.

In den übrigen Fällen schließt sich jedoch an die Umsetzung Keton/$P_4O_6$ eine thermische Nachbehandlung des zunächst polymer anfallenden Rohprodukts an. Dazu wird dieses Rohprodukt für 10 bis 60 Minuten auf Temperaturen zwischen der Umsetzungstemperatur und 250 °C erhitzt. Die jeweilige Mindesttemperatur ist dabei von der Reaktionsfähigkeit des verwendeten Ketons abhängig. Auf diese Weise erhält man die rohen Vinylpyrophosphonsäurederivate, die wiederum durch Zugabe der berechneten Menge Wasser in die entsprechenden Vinylphosphonsäurederivate übergeführt werden können.

Es besteht auch die Möglichkeit, das Rohprodukt im Autoklaven mit einem Überschuß Wasser bei Temperaturen, die zwischen der Umsetzungstemperatur und 250° liegen, und erhöhtem Druck direkt zu den Vinylphosphonsäurederivaten umzusetzen.

Wie die folgenden Beispiele verdeutlichen, handelt es sich bei dem erfindungsgemäßen Verfahren um einen neuen Zugang zu Verbindungen der Phosphonsäure, die damit in einfacher Weise und in hoher Ausbeute durch Umsetzung von Tetraphosphorhexoxid und Ketonen herzustellen sind.

Eine solche Reaktion ist bisher noch nicht beschrieben worden ; und es läßt sich beim Zusammengeben der Ausgangsprodukte auch keine Reaktion feststellen. Um so überraschender war es daher für einen Fachmann, daß in Gegenwart von katalytischen Mengen protonenabspaltender Substanzen eine exotherme Reaktion eintritt.

Beispiel 1

In einem Mehrhalskolben mit Rührer, Rückflußkühler, Tropftrichter und Innenthermometer werden unter Stickstoffatmosphäre 61,2 g Acetophenon und 1 g 1-Phenylvinyl-1-phosphonsäure vorgelegt und bei 100 °C 27,5 g Tetraphosphorhexoxid, welches in 50 ml Toluol gelöst ist, so zugetropft, daß die Reaktionstemperatur ohne Zusatzheizung konstant bleibt. Nach beendeter Umsetzung kann durch Auskristallisieren aus der abgekühlten Lösung die reine 1-Phenyl-vinylpyrophosphonsäure gewonnen werden. Ausbeute : 55 g (61 %), Schmelzpunkt : 113-118 °C.

Zur Herstellung der entsprechenden Phosphonsäure wird jedoch zur rohen Reaktionslösung bei 40-50 °C 5 ml Wasser gegeben und mit weiteren 130 ml Toluol verdünnt. Nach Abkühlen auf Raumtemperatur wird die ausgefallene 1-Phenyl-vinyl-1-phosphonsäure abgesaugt und getrocknet. Ausbeute : 78 g (85 %), Schmelzpunkt : 108 °C.

Das Filtrat enthält noch Produkt und kann für den nächsten Ansatz verwendet werden. Durch die Rückführung des Filtrates erhöht sich die Ausbeute auf ca. 90 %.

Beispiel 2

In einer Apparatur analog Beispiel 1 werden 50 g p-Bromacetophenon und 0,13 ml Wasser vorgelegt und bei 100 °C eine Lösung von 13,8 g Tetraphosphorhexoxid in 25 ml Toluol zugetropft. Anschließend wird auf 40-50 °C abgekühlt und die entstandene Pyrophosphonsäure durch Zugabe von 2,5 ml Wasser hydrolysiert. Nach Abkühlen auf Raumtemperatur wird die 1-p-Bromphenylvinyl-1-phosphonsäure abfiltiert und getrocknet. Ausbeute : 48,5 g (73 %), Schmelzpunkt : 157 °C.

Durch Rückführung des Filtrates läßt sich die Ausbeute auf über 80 % steigern.

Beispiel 3

In einer Apparatur analog Beispiel 1 werden 67 g Propiophenon und 0,25 ml Wasser vorgelegt und bei 140-145 °C eine Lösung von 27,5 g Tetraphosphorhexoxid in 50 ml 1,2-Dichlorbenzol zugetropft. Nach einer Nachreaktion von 15 Minuten bei 145 °C läßt man auf 40-50 °C abkühlen und hydrolysiert durch Zugabe von 5 ml Wasser. Zur Verdünnung werden 140 ml 1,2-Dichlorbenzol zugesetzt und mit einer geringen Menge 1-Phenylpropen-1-phosphonsäure angeimpft. Nach Abkühlen auf Raumtemperatur wird das Kristallisat abfiltriert, mit Hexan gawaschen und getrocknet. Ausbeute : 87 g (88 %), Schmelzpunkt : 120-127 °C. Durch Rückführung des Filtrates erhöht sich die Ausbeute auf über 90 %.

Das Produkt besteht aus einem cis-trans-Isomerengemisch von 1-Phenylpropen-1-phosphonsäure. Das cis-trans-Verhältnis beträgt nach Kernresonanzuntersuchungen etwa 2 : 3.

Beispiel 4

In einer Apparatur analog Beispiel 1 werden 250 ml Toluol, 196 g (2 mol) Cyclohexanon und 0,5 ml Wasser vorgelegt. 110 g (0,5 mol) Tetraphosphorhexoxid werden so zugetropft, daß bei zusätzlicher Kühlung mit einem Wasserbad 80 °C Reaktionstemperatur nicht überschritten werden. In die gelborange, mittelviskose Flüssigkeit werden ohne längere Nachreaktion langsam 250 ml Wasser eingetropft, wobei sich bereits bei den ersten Tropfen ein Harz abscheidet. Während des folgenden dreistündigen Kochens nimmt die Viskosität des Harzes ab und seine Wasserlöslichkeit zu. Man erhält zwei Phasen, von denen die untere wäßrige abgetrennt und einer Wasserdampfstrippung unterworfen wird, um gelöste Toluolreste auszutreiben. Nach ca. 1 h liegt eine klare, gelbe Lösung vor, die in einem Autoklaven 2 h 250 °C erhitzt wird. Vom Druckhydrolysat wird anschließend im Vakuum am Rotationsverdampfer das Wasser abgezogen und 324 g eines gelben, viskosen Rohproduktes erhalten, das langsam vollständig durchkristallisiert. Das Rohprodukt besteht laut $^{31}P$-NMR-Spektrum bezogen auf eingesetzten Phosphor aus 75 % Cyclohexen-1-phosphonsäure, 9 % phosphoriger Säure und 15 % Phosphorsäure. Das Umkristallisieren aus Eisessig ergibt 230 g (1,42 mol) Cyclohexen-1-phosphonsäure. Schmelzpunkt : 128 °C, Ausbeute : 71 % d. Theorie.

Beispiel 5

In einer Apparatur analog Beispiel 1 werden 800 ml Aceton und 0,5 g Propen-2-phosphonsäure vorgelegt und auf 50 °C erwärmt. 88 g (0,4 mol) Tetraphosphorhexoxid werden so zugetropft, daß das Aceton leicht unter Rückfluß siedet. Es bildet sich ein weißer, amorpher Feststoff. Etwa 1 h wird ohne zusätzliche Heizung nachgerührt, dann 14,4 g (0,8 mol) Wasser zugetropft, wobei die Reaktionstemperatur abermals über 50 °C ansteigt. 30 min wird ohne zu heizen gerührt, dann der weiße Feststoff

abgesaugt und bis zu Gewichtskonstanz getrocknet. Vor diesem werden 192 g, in 300 ml heißem Wasser gelöst und in einem Autoklaven auf 210-240 °C 2,5 h erhitzt. Anschließend wird im Vakuum das Wasser abgezogen und 190 g einer viskosen, farblosen Flüssigkeit erhalten, die 15 Minuten lang auf 200 °C erhitzt wird. Das so erhaltene Produkt enthält laut $^{31}P$-NMR 64 % Propen-2-phosphonsäure.

Beispiel 6

Analog Beispiel 5 wird aus Tetraphosphorhexoxid und Aceton mit anschließender partieller Hydrolyse das Primärprodukt hergestellt, dessen 50 %ige wäßrige Lösung in ein auf 250 °C erhitztes, mit Raschigringen gefülltes Quarzrohr getropft wird. Im gegenläufigen Stickstoffstrom geht das Wasser über einen Kolonnenkopf aus dem System, während die Thermolyseprodukte das Quarzrohr am unteren Ende in eine Vorlage verlassen. Laut $^{31}P$'NMR-Spektrum enthält das Thermolysat 57 % Propen-2-phosphonsäure bezogen auf eingetzten Phosphor.

Beispiel 7

In einer Apparatur analog Beispiel 1 werden 62,5 g Methylisobutylketon und 0,25 ml Wasser vorgelegt und bei 100 °C 27,5 g $P_4O_6$ zugetropft. Anschließend wird die Mischung 30 Minuten lang auf 200 °C erwärmt. Nach Abkühlen auf 50 °C wird das enstandene Pyrophosphonsäuregemisch durch Zugabe von 5 ml Wasser hydrolysiert. Es fällt ein viskoses, schwach gelb gefärbtes Öl an, das nach einigen Tagen vollständig durchkristallisiert und nach Kernresonanzuntersuchungen zu 93 % aus substituierten Pentenphosphonsäuren mit folgender Verteilung besteht :

11 % 4-Methyl-2-penten-2-phosphonsäure (cis)
66 % 4-Methyl-2-penten-2-phosphonsäure (trans)
23 % 4-Methyl-1-penten-2-phosphonsäure.

**Patentansprüche**

1. Verfahren zur Herstellung von Derivaten von Vinylphosphonsäure oder von Vinylpyrophosphonsäure dadurch gekennzeichnet, daß man ein Keton der allgemeinen Formel

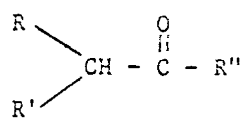

in der R und R′ gleich oder verschieden sein können und für Wasserstoff oder einen halogensubstituierten oder nicht substituierten Alkyl-, Aryl-, Alkaryl- oder Aralkylrest mit 1 bis 18 C-Atomen stehen, während R" einen Alkyl-, Aryl-, Alkaryl- oder Aralkylrest mit 1 bis 18 C-Atomen darstellt oder wenn R Wasserstoff ist, R′ und R" zusammen unter Ringbildung einen Butylenrest darstellen, mit Tetraphosphorhexoxid ($P_4O_6$) in Gegenwart von katalystischen Mengen einer protonenabgebenden Substanz bei erhöhten Temperaturen umsetzt und, im Falle der Herstellung von Vinylphosphonsäurederivaten, die erhaltenen Vinylpyrophosphonsäurederivate mit einer äquivalenten Menge Wasser hydrolysiert.

2. Verfahren nach Anspruch 1 zur Herstellung von Cyclohexenphosphon- oder von Cyclohexenpyrophosphonsäure, dadurch gekennzeichnet, daß man Cyclohexanon mit Tetraphosphorhexoxid in Gegenwart von katalytischen Mengen einer protonenabgebenden Substanz bei erhöhten Temperaturen umsetzt und im Falle der Herstellung von Cyclohexenphosphonsäure die als Umsetzungsprodukt erhaltene Cyclohexenpyrophosphonsäure mit einer äquivalenten Menge Wasser hydrolysiert.

3. Verfahren nach Anspruch 1 oder 2, dadurch gekennzeichnet, daß man das Keton mit $P_4O_6$ in einem Molverhältnis von mindestens 4 : 1 umsetzt.

4. Verfahren nach einem der Ansprüche 1 bis 3, dadurch gekennzeichnet, daß man die protonenabspaltende Substanz in Mengen von mindestens 0,000 1 Gew% bezogen auf $P_4O_6$ einsetzt.

5. Verfahren nach Anspruch 4, dadurch gekennzeichnet, daß man die protonenabspaltende Substanz in Mengen von 0,01 bis 1,0 Gewichts% bezogen auf $P_4O_6$ einsetzt.

6. Verfahren nach einem der Ansprüche 1 bis 5, dadurch gekennzeichnet, daß man die Umsetzung bei Temperaturen von 40 bis 150 °C durchführt.

7. Verfahren nach einem der Ansprüche 1 bis 6, dadurch gekennzeichnet, daß man als protonenabspaltende Substanz Wasser, Alkohole, Amine, Salzsäure, Schwefelsäure, Phosphorsäure, phosphorige Säure, Phosphonsäuren oder Carbonsäuren einsetzt.

8. Verfahren nach Anspruch 7, dadurch gekennzeichnet, daß man als protonenabspaltende Substanz die als Endprodukt gewünschte Vinylphosphon- oder Vinylpyrophosphonsäure einsetzt.

9. Verfahren nach einem der Ansprüche 1 bis 8, dadurch gekennzeichnet, daß man das nach der

Umsetzung erhaltende Produkt anschließend tempert, bei Temperaturen, die zwischen der Umsetzungstemperatur und 250 °C liegen.

10. Verfahren nach einem der Ansprüche 1 bis 9, dadurch gekennzeichnet, daß man das nach der Umsetzung erhaltene Produkt einer Druckhydrolyse unterwirft, bei Temperaturen, die zwischen der Umsetzungstemperatur und 250 °C liegen.

**Claims**

1. Process for making vinylphosphonic or vinylpyrophosphonic acid derivatives, wherein a ketone of the formula

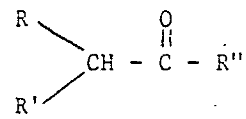

in which R and R', which may be identical or different, stand for hydrogen or a halogen-substituted or unsubstituted alkyl group, aryl group, alkaryl group or aralkyl group having from 1 to 18 carbon atoms, and R" stands for an alkyl group, aryl group, alkaryl group, or aralkyl group having from 1 to 18 carbon atoms, or if R stands for hydrogen, R' and R" jointly stand with cyclisation for a butyl group, is reacted with tetraphosphorus hexoxide ($P_4O_6$) at elevated temperatures in the presence of catalytically active quantities of a proton donor and, in the event of the derivatives made being vinylphosphonic acid derivates, vinylpyrophosphonic acid derivatives are hydrolyzed with an equivalent quantity of water.

2. Process as claimed in claim 1 for making cyclohexenephosphonic acid or cyclohexenepyrophosphonic acid, wherein cyclohexanone is reacted with tetraphosphorus hexoxide at elevated temperatures in the presence of catalytically active quantities of a proton donor and, in the event of the product made being cyclohexenephosphonic acid, the cyclohexenepyrophosphonic acid obtained as the reaction product is hydrolyzed with an equivalent quantity of water.

3. Process as claimed in claim 1 or 2, wherein the ketone is reacted with $P_4O_6$ in a molar ratio of at least 4 : 1.

4. Process as claimed in any of claims 1 to 3, wherein the proton donor is used in a proportion of at least 0.000 1 weight %, based on $P_4O_6$.

5. Process as claimed in claim 4, wherein the proton donor is used in proportions of 0.01 to 1.0 weight %, based on $P_4O_6$.

6. Process as claimed in any of claims 1 to 5, wherein the reaction is effected at temperatures of 40 to 150 °C.

7. Process as claimed in any of claims 1 to 6, wherein water, alcohols, amines, hydrochloric acid, sulfuric acid, phosphoric acid, phosphorous acid, phosphonic acids or carboxylic acids are used as the proton donor.

8. Process as claimed in claim 7, wherein the vinylphosphonic acid or vinylpyrophosphonic acid desired as final product is used as the proton donor.

9. Process as claimed in any of claims 1 to 8, wherein the product obtained after the reaction is tempered at temperatures between the reaction temperature and 250 °C.

10. Process as claimed in any of claims 1 to 9, wherein the product obtained after the reaction is hydrolyzed under pressure at temperatures between the reaction temperature and 250 °C.

**Revendications**

1. Procédé de préparation de dérivés de l'acide vinylphosphonique ou vinylpyrophosphonique, caractérisé en ce que l'on fait réagir une cétone répondant à la formule générale

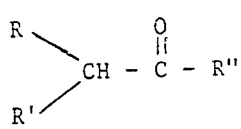

dans laquelle R et R', pouvant être identiques ou différents, représentent l'hydrogène ou un reste alkyle, aryle, alkylaryle ou arylalkyle en $C_1$-$C_{18}$, substitué par un halogène ou non substitué, tandis que R" représente un reste alkyle, aryle, alkylaryle ou arylalkyle en $C_1$-$C_{18}$ ou, si R représente l'hydrogène, R' et R" représentent conjointement avec cyclisation un reste butylène, avec l'hexoxyde tétraphosphoré ($P_4O_6$) à température élevée en présence de quantités catalytiques d'une substance cédant des protons et, dans le cas de la préparation de dérivés de l'acide vinylphosphonique, on hydrolyse les dérivés de l'acide vinylpyrophosphonique par une quantité équivalente d'eau.

2. Procédé selon la revendication 1 pour la préparation de l'acide cyclohexènephosphonique ou cyclohexènepyrophosphonique, caractérisé en ce que l'on fait réagir la cyclohexanone avec l'hexoxyde tétraphosphoré à température élevée en présence de quantités catalytiques d'une substance cédant des protons et, dans le cas de la préparation de l'acide cyclohexènephosphonique, on hydrolyse l'acide cyclohexènepyrophosphonique obtenu comme produit de réaction par une quantité équivalente d'eau.

3. Procédé selon la revendication 1 ou 2, caractérisé en ce que l'on fait réagir la cétone avec $P_4O_6$ dans un rapport molaire d'au moins 4 : 1.

4. Procédé selon l'une des revendications 1 à 3, caractérisé en ce que l'on utilise la substance cédant des protons en quantités d'au moins 0,000 1 % en poids, par rapport au $P_4O_6$.

5. Procédé selon la revendication 4, caractérisé en ce que l'on utilise la substance cédant des protons en quantités de 0,01 à 1,0 % en poids, par rapport au $P_4O_6$.

6. Procédé selon l'une des revendications 1 à 5, caractérisé en ce que l'on effectue la réaction à des températures de 40 à 150 °C.

7. Procédé selon l'une des revendications 1 à 6, caractérisé en ce que l'on utilise comme substance cédant des protons l'eau, les alcools, les amines, l'acide chlorhydrique, l'acide sulfurique, l'acide phosphorique, l'acide phosphoreux, les acides phosphoniques ou carboxyliques.

8. Procédé selon la revendication 7, caractérisé en ce que l'on utilise comme substance cédant des protons l'acide vinylphosphonique ou vinylpyrophosphonique recherché comme produit final.

9. Procédé selon l'une des revendications 1 à 8, caractérisé en ce que l'on recuit ensuite le produit obtenu après la réaction à des températures comprises entre la température de réaction et 250 °C.

10. Procédé selon l'une des revendications 1 à 9, caractérisé en ce que l'on soumet le produit obtenu après la réaction à une hydrolyse sous pression à des températures comprises entre la température de réaction et 250 °C.